# EUROPEAN PATENT APPLICATION

(11) **EP 1 130 039 A1**
(43) Date of publication of application: **05.09.2001**
(21) Application number: 00200705.2
(22) Date of filing: 29.02.2000
(51) Int. Cl.: C08G 18/42, C08G 18/73, C09D 5/03

(54) **Powder paint binder composition**

(71) Applicant: DSM N.V., 6411 TE Heerlen (NL)
(72) Inventor: Molhoek, Leendert Jan, 8072 HV Nunspeet (NL); Loontjens, Jacobus Antonius, 6231 KK Meerssen (NL); Spoolder, Bianca Maria Johanna, 7623 CC Borne (NL); Plum, Bartholomeus Johannes Margaretha, 6235 AW Meerssen (NL)

(57) **Abstract**

The invention is directed to a thermosetting powder paint binder composition comprising:
a)a polyester comprising at least 75 mol% of isophtalic acid units and
b)a crosslinker containing groups capable of reacting with hydroxyl groups and having an aliphatic chain with more than 6 atoms.

The polyester may comprise 100 mol% of isophtalic acid units.

The powder coatings show an improved combination of weathering characteristics and mechanical properties.

## Description

The invention relates to a powder paint binder composition which results after curing in an outdoor (super)durable powder coating.

Thermosetting powder paint compositions for outdoor applications predominantly contain curable polyester resins which are carboxyl- or hydroxyl-functional to ensure a crosslinking reaction. Suitable curing agents are for example blocked isocyanates for example caprolactam blocked isophorone diisocyanate in combination with hydroxyl functional polyesters and triglycidylisocyanurate in combination with carboxyl functional polyesters. A wide range of polyesters allows a combination of useful properties such as tunable reactivity, color stability, appearance, corrosion resistance and weathering performance. The outdoor segment may be subdivided in a durable part (polyesters comprising about 10-30% isophtalic acid units and 70-90% terephtalic acid units) and a superdurable part (fully isophtalic acid based)

However, a further improvement of the powder paint compositions having good weathering characteristics is necessary because the binder compositions comprising a hydroxyl functional polyester comprising 100 % isophtalic acid units and a blocked isocyanates result in products which are too brittle.

It is the object of the present invention to provide a powder paint (binder) composition which results after curing in a powder coating having an excellent combination of weathering performance, flexibility, impact resistance and flow properties.

The thermosetting powder paint binder composition according to the invention comprises:
a) a polyester comprising at least 75 mol% of the acid monomers of isophtalic acid units and
b) a crosslinker containing groups capable of reacting with hydroxyl groups and having a lineair aliphatic chain with more than 6 atoms.

The aliphatic chain may contain between 0 and 25 % by weight cycloaliphatic groups.Preferably this amount is less than 5 % by weight. More preferably the chain comprises no cycloaliphatic groups.

The powder paint composition according to the invention yields coatings showing good UV-resistance in combination with a good flexibility and good mechanical properties such as for example the impact resistance. The combination of the superior weathering characteristics and good resistance properties is very surprising.

The characteristics may be achieved after a curing time between for example 1 and 15 minutes at a temperature between for example 135°C and 250°C.

Preferably, the groups of the crosslinker which are capable of reacting with hydroxyl groups are isocyanate groups.

The isocyanate functionality of the crosslinker is preferably equal or higher than 2 and is more preferably between 2 and 6.

The atoms of the crosslinker having isocyanate units and having an aliphatic chain with more than 6 atoms may be for example carbon atoms, nitrogen atoms, sulfur atoms, oxygen atoms and/or phosphoric atoms.

Preferably the atoms are carbon atoms.

The amount of carbon atoms in the aliphatic chain between the isocyanate groups of the crosslinker is higher than 6 and may be less than for example 30 carbon atoms.Preferably the amount of carbon atoms is 8 or higher and more preferably 9 or higher.

Preferably the crosslinker is a blocked crosslinker because the isocyanate in the crosslinker must be protected in order to avoid the crosslinking reaction at room temperature and to provide good storage stability of the coating. A suitable blocking agent may be selected ,for example, from the group consisting of caprolactam, imidazol, triazole, benzotriazole, pyrazole, oxime such as for example acetoxyoxime, ethyl acetoacetate, hydroxylamine, imide, N-hydroxyimide, phenol, cyclohexanol and malonic acid ester.

Suitable aliphatic crosslinkers include for example the isocyanates obtained by phosgenation of amines and for example the reaction products (according to PCT/NL 99/00589) of an amine and a carbonic acid derivative according to the following general formula: 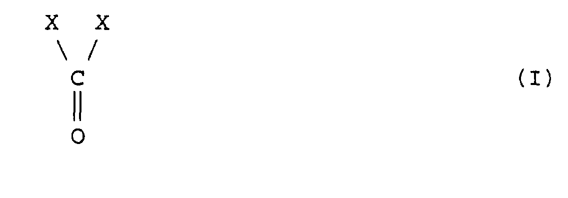 where fragments X in the form of XH are a lactam, oxime, imide or triazole.

Suitable amines include mono-, di-, tri-, polyamines or mixtures of these. Suitable amines include for example diaminebutane, diaminohexane, diaminooctane (DAO), diaminonane, diaminododecane (DA), trisaminononane (TAN), trisaminoethylamine, hydrogenated methylene dianiline, diamino dioxydecane, diamino dioxododecane, bishexamethylene trisamine and Jeffamines. Other suitable amines are for example oligomers, as reaction products of two components. Examples of oligomers are the reaction products of a diamine with adipic acid, urea, carbonyl biscaprolactamate (CBC) and with 1 or 2 caprolactam molecules.

Suitable crosslinkers are for example caprolactam blocked diisocyanates and triisocyanates, for example, 1,12-diisocyanatododecane, 1,8-diisocyanatodooctane, 1,8-diisocyanato(5-isocyanatomethyl)octane, 1,9-diisocyanatononane, 1,10-diisocyanatodecane, 1,11- diisocyanatoundecane trisisocyanate , 1,11- diisocyanato( 3,6,9-trioxy)undecane and/or trisisocyanate.

Preferably the polyester comprises at least 90 mol.% of isophtalic acid units. More preferably the polyester comprises 100 mol.% (with respect to the total amount of acid monomers) isopthalic acid units

A suitable range for the hydroxy number of the polyester ranges between for example 20 and 150 mg KOH/g resin, the acid number may be lower than 25, and the glass transition temperature ranges between 25 and 100 degrees celcius. The molar ratio hydroxyl functional groups of the polymer : isocyanate groups of the crosslinker may range between for example 2:1 and 1:2 and preferably between 1,2 : 1 and 1: 1,5.

Polyesters are generally based on the residues of aliphatic polyalcohols and polycarboxylic acids.

In case the acid units are not 100% isophtalic acid units the polyester may comprise units of for example terephthalic acid, 2,6-naphthalene dicarboxylic acid and 4,4-oxybisbenzoic acid.

Other suitable aromatic cycloaliphatic and/or acyclic polycarboxylic acids useful herein include, for example, 3,6-dichloro phthalic acid, tetrachloro phthalic acid, tetrahydro phthalic acid, hexahydro terephthalic acid, hexachloro endomethylene tetrahydro phthalic acid, phthalic acid, azelaic acid, sebacic acid, decane dicarboxylic acid, adipic acid, succinic acid and maleic acid. These other carboxylic acids can be used in amounts of up to for example 25 mol% of the total amount of carboxylic acids. These acids may be used as such, or, in so far as available at their anhydrides, acid chlorides or lower alkyl esters.Small amounts of trifunctional acids for example trimelittic acid may be applied to obtain branched polyesters.

Hydroxy carboxylic acids and/or optionally lactones can also be used, such as, for example, 12-hydroxy stearic acid, hydroxy pivalic acid and ε-caprolactone. Monocarboxylic acids, such as, for example, benzoic acid, tert.-butyl benzoic acid, hexahydro benzoic acid and saturated aliphatic monocarboxylic acids, may, if desired, be used in minor amounts.

Useful polyalcohols, in particular diols, reactable with the carboxylic acids to obtain the polyester include aliphatic diols such as, for example, ethylene glycol, propane-1,2-diol, propane-1,3-diol, butane-1,2-diol, butane-1,4-diol, butane-1,3-diol, 2,2-dimethylpropanediol-1,3 (= neopentyl glycol), hexane-2,5-diol, hexane-1,6-diol, 2,2-bis-(4-hydroxy-cyclohexyl)-propane (hydrogenated bisphenol-A), 1,4-dimethylolcyclohexane, diethylene glycol, dipropylene glycol, 2,2-bis[4-(2-hydroxy ethoxy)-phenyl] propane, the hydroxy pivalic ester of neopentyl glycol, butyethylpropane diol and ethylmethylpropane diol.

Small amounts, such as less than for example about 20 wt.% and preferably less than 15 wt.%, of trifunctional alcohols may be used in order to obtain branched polyesters. Examples of usefull polyols are glycerol, hexanetriol, trimethylol ethane, trimethylol propane and tris- (2-hydroxyethyl)-isocyanurate.

Tetrafunctional monomers generally are not preferred, because these may cause too much branching and gelling, although minute quantities can be used. Examples of useful polyfunctional alcohols and acids are sorbitol, pentaerithritol and pyromellitic acid. However, in order to synthesise branched polyesters, trifunctional monomers are preferred.

The polyesters are prepared according to conventional procedures by esterification or transesterification, optionally in the presence of customary esterification catalysts such as, for instance, dibutyltin oxide or tetrabutyl titanate. Preparation conditions and the COOH/OH ratio can be selected so as to obtain end products that have an acid number and/or a hydroxyl number within the targeted range of values.

The preparation of thermosetting powder coatings in general and the chemical reactions for curing powder paints to form cured coatings are described by Misev in Powder Coatings, Chemistry and Technology (1991, John Wiley) on pp. 42-54, p. 148 and pp. 224-226. The isocyanate / hydroxyl curing reaction is described at pages 56-68.A thermosetting powder paint binder composition is generally defined as the resinous part of the powder paint consisting of polymer and crosslinker.

If so desired, the usual additives can be used in the binder composition and in the powder paint system according to the invention, such as for example pigments, fillers, degassing agents, flow agents and stabilizers. Suitable pigments are for example inorganic pigments, such as for example titanium dioxide, zinc sulphide, iron oxide and chromium oxide, and also organic pigments such as for example azo compounds. Suitable fillers are for example metal oxides, silicates, carbonates and sulphates.

Primary and/or secondary antioxidants, UV stabilizers such as quinones, (sterically hindered) phenolic compounds, phosphonites, phosphites, thioethers and HALS compounds (hindered amine light stabilizers) can for example be used as stabilizers.

Examples of degassing agents are benzoin and cyclohexane dimethanol bisbenzoate. The flow agents include for example polyalkylacrylates, fluorohydrocarbons and silicone fluids. Other suitable additives are for example additives for improving tribocharging, such as sterically hindered tertiary amines that are described in EP-B-371528.

Powder paints according to the invention can be applied in the usual manner, for example by electrostatically spraying the powder onto an earthed substrate and curing the coating by exposing it to heat at a suitable temperature for a sufficient length of time. The applied powder can for example be heated in a gas oven, an electric oven or with the aid of infrared radiation.

Thermosetting powder paint compositions intended for industrial applications are described in a general sense in Powder Coatings, Chemistry and Technology, Misev, pages 141-173 (1991).

Compositions according to the present invention can be used in powder paints for use on, for example, metal, wooden and plastic substrates. The coatings are also suitable for use in the automotive industry for coating parts and accessories.

The type of monomers to be used to prepare the polyester, the crosslinkers and the curing conditions can be chosen to depend on the desired use.

The systems according to the invention can be used in pigmented an in unpigmented compositions.

If so desired, the usual additives such as pigments, fillers, stabilizers, dispersing agents, flow-promoting agents and defoaming agents can be added to the binder system according to the invention.

The invention will be elucidated below on the basis of the following examples.

### Experiment 1.

### Preparation of the caprolactam-blocked 1,8-diisocyanato, 4-(isocyanatomethyl)octane

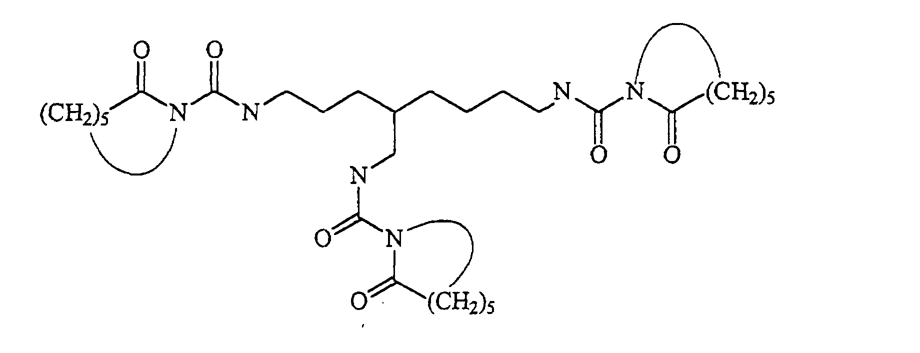

302.4 g (1.2 mol) carbonyl-bis-caprolactam was dissolved in 400 ml ethyl acetate at 78°C. In one hour 69.3 g (0.4 mol) triamino nonane, dissolved in 100 ml ethyl acetate, was added dropwise. The reaction was monitored by means of TLC. After 3 hours the clear solution was cooled to room temperature and extracted 4 times with 500 ml water (with some NaCl). The solution was then dried with Na2SO₄. The Na2SO₄ was removed by filtration and the ethyl acetate was removed by means of the rotavapor. The product was dried at 75°C and in a vacuum. Caprolactam-blocked of 1,8-diisocyanato, 4-(isocyanatomethyl) octane was obtained pure, as a lightly coloured oil (yield = 99%).

### Example I

### Preparation of a powder paint binder composition and powder coating

A polyester resin comprising 100% isophtalic acid units and an acid value of 45 ( Uralac P1550™ of DSM Resins), the crosslinker according to experiment 1, flow aid (Resiflow PV 5) , titanium dioxide (Kronos 2160) and benzoin were mixed in an extruder at 100°C. The extrudate was cooled, ground and sieved, and the sieve fraction smaller than 90 micrometers was used as powder coating. The powder coating was sprayed electrostatically onto aluminium panels. The panels sprayed with powder coating were cured in a furnace at 150°C for 30 minutes.

### Comparative Example A

Example 1 was repeated with the exception that the crosslinker was replaced by Vestagon B1530™ being isophoron diisocyanate blocked with caprolactam.

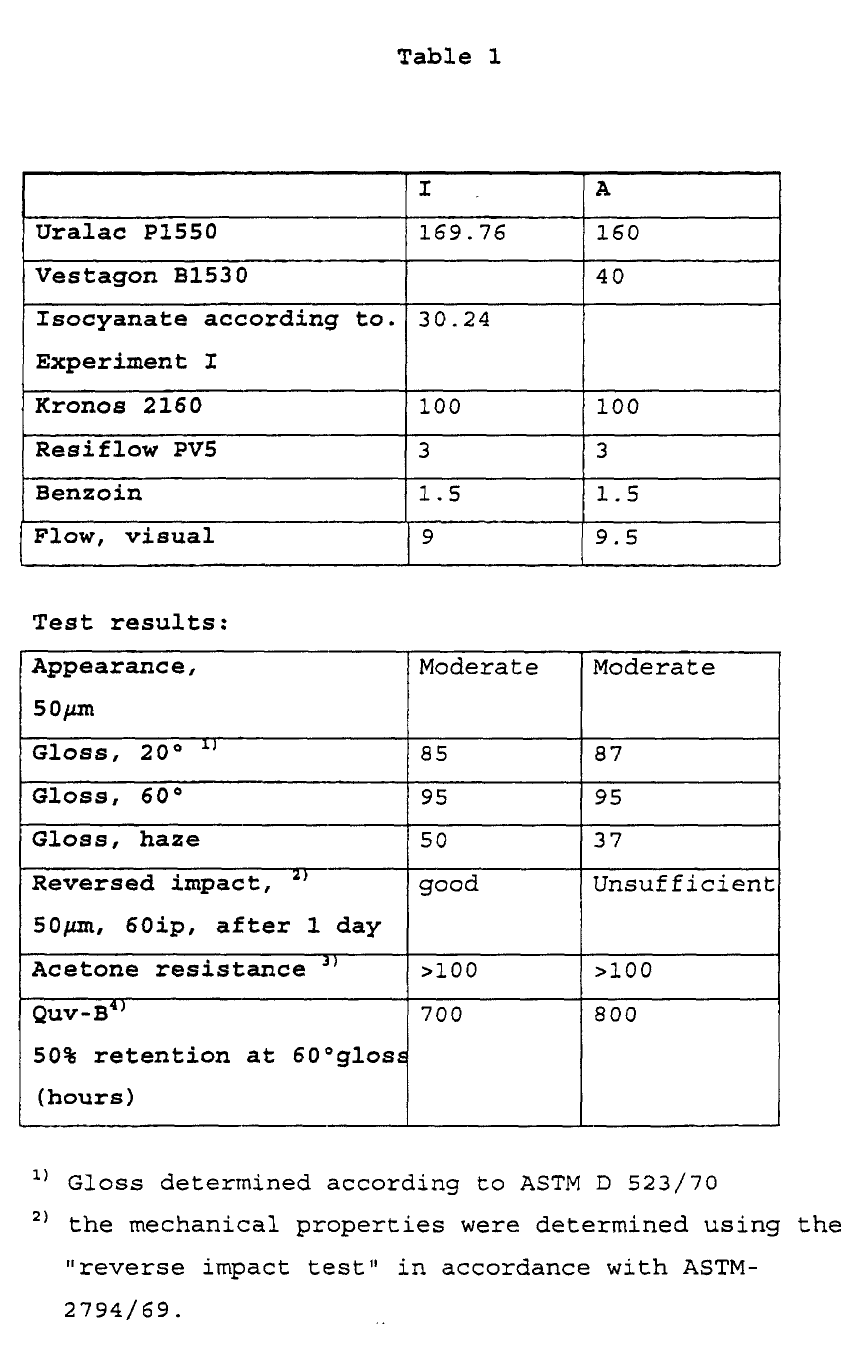

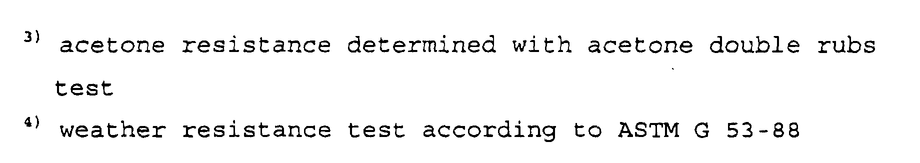

These experiments show that the binder composition according to the invention results in an improved combination of weathering characteristics and mechanical properties.

## Claims

1. A thermosetting powder paint binder composition comprising:
a) a polyester comprising at least 75 mol% of isophtalic acid units and
b)a crosslinker containing groups capable of reacting with hydroxyl groups and having an aliphatic linear chain with more than 6 atoms.

2. A thermosetting powder paint binder composition according to Claim 1 **characterized in that** the crosslinker contains isocyanate groups and the isocyanate functionality is equal or higher than 2.

3. A composition according to any one of Claims 1-2 **characterised in that** the crosslinker has an aliphatic chain with more than 6 carbon atoms.

4. A composition according to Claim 3 **characterised in that** the amount of carbon atoms is between 7 and 30.

5. A thermosetting powder paint binder composition according to any one of claims 1-4 **characterised in that** the the polyester comprises at least 90 mol% of isophtalic acid units.

6. A thermosetting powder paint binder composition according to Claim 5 **characterised in that** the polyester comprises 100 mol% of isophtalic acid units.

7. A thermosetting powder paint binder composition according to any one of Claims 1-6 wherein the crosslinker is a blocked 1,12-diisocyanatododecane, 1,8-diisocyanatodooctane, 1,8-diisocyanato(5-isocyanatomethyl)octane, 1,9-diisocyanatononane, 1,10- diisocyanatodecane, 1,11- diisocyanatoundecane trisisocyanate , 1,11-diisocyanato( 3,6,9-trioxy) undecane and/or trisisocyanate.

8. A powder paint composition comprising a binder composition according to any one of Claims 1-7.

9. A powder coating obtained by curing of a paint according to Claim 8.

10. A wholly or partly coated substrate,
**characterized in that** as coating use is made of a powder coating according to Claim 9.
